# EUROPÄISCHE PATENTSCHRIFT

(11) **EP 2 145 131 B1**
(45) Veröffentlichungstag und Bekanntmachung des Hinweises auf die Patenterteilung: **31.08.2016**
(21) Anmeldenummer: 08736367.7
(22) Anmeldetag: 18.04.2008
(51) Int. Cl.: F23L 7/00, F02C 3/30, F23K 5/00, B01F 3/04, F01K 23/06, F01K 21/04, F23R 3/28

(54) **Verfahren zum Betrieb einer Gasturbine mit wasserstoffreichem Brenngas sowie dafür geeignete Gasturbine**
Method for operation of a gas turbine with H2-rich fuel gas and gas turbine suitable for this method
Procédé d'opération d'une turbine à gaz avec un gaz combustible riche en hydrogène et turbine à gaz associée

(30) Priorität: 08.05.2007 EP 07107730
(43) Veröffentlichungstag der Anmeldung: 20.01.2010
(73) Patentinhaber: General Electric Technology GmbH, 5400 Baden (CH)
(72) Erfinder: CARRONI, Richard, Dr., 5443 Niederrohrdorf (CH); GUIDATI, Gianfranco, Dr., 8049 Zürich (CH)
(74) Vertreter: Bernotti, Andrea
(86) Internationale Anmeldenummer: PCT/EP2008/054718
(87) Internationale Veröffentlichungsnummer: WO 2008/135362

(56) Entgegenhaltungen:
- EP-A- 0 982 543
- EP-A2- 0 517 646
- WO-A-2005/124231
- WO-A1-02/18759
- US-A- 5 233 823
- US-A- 6 148 602
- US-A1- 2003 217 553
- US-B1- 6 453 659

## Beschreibung

### Technisches Gebiet

Die Erfindung betrifft ein Verfahren zum sicheren, NOx-emissionsarmen Betrieb einer stationären Gasturbinenanlage mit wasserstoffreichem Brenngas sowie eine Gasturbinenanlage mit Vorrichtung zur Durchführung des Verfahrens.

Wasserstoffreiches Brenngas wird dabei entsprechend dem allgemeinen Verständnis des Fachmannes als Brenngas angesehen, das reich an molekularem Wasserstoff (H2) ist.

### Stand der Technik

Die Forschung und Entwicklung der Verbrennung von Wasserstoff oder wasserstoffreichen Brennstoffen in Gasturbinen wird im wesentlichen von zwei Faktoren vorangetrieben:
Zum einen besteht ein weltweites Interesse, den Ausstoss von Treibhausgasen, insbesondere on CO₂ zu reduzieren. Eine Möglichkeit hierfür ist die Umstellung von konventionellen fossilen Brennstoffen auf eine wasserstoffbasierte Energieversorgung. Dabei kann diese zunächst noch auf konventionellen fossilen Rohstoffen mit Wasserstoffsynthese und CO₂ Bindung basieren.

Zum anderen führen die limitierten Erdgasreserven zu Überlegungen synthetisch aufbereitete, gasförmige Brennstoffe alternativ zu oder in Kombination mit der Verbrennung herkömmlicher Brennstoffarten einzusetzen. Diese synthetisch aufbereiteten, gasförmigen Brennstoffe, wie sie zum Beispiel in IGCC (Integrated Gasification Combined Cycle) vorkommen, enthalten häufig hohe Wasserstoffkonzentrationen.
Die Verbrennung von Wasserstoff in konventionellen Verbrennungssystemen von Gasturbinen führen aufgrund der hohen Flammgeschwindigkeit und kleinen Zündverzugszeit des Wasserstoffs bekanntermassen zu technischen Problemen, wie erhöhten NOx Emissionen und Flammrückschlag.

Als Gegenmassnahme sind neben der einfachen Herabsetzung der Betriebswerte, die Möglichkeit den wasserstoffreichen Brennstoff mit N₂ oder anderen Inertgasen zu verdünnen und insbesondere verschiedene Konzepte zur Verdünnung der Verbrennungsluft oder des Brenngases mit Dampf bekannt. Dabei wird Dampf eingespritzt oder Wasser zur Verdampfung im Luftkanal oder in dem Brennstoffsystem eingespritzt.

So beschreibt zum Beispiel die EP0731255 eine Gasturbine, in der überhitzter Dampf und/ oder Sattdampf nach Überhitzung in einem Wärmetauscher in die Brennkammer eingespritzt wird. Die EP0899438 führt als weiteren Schritt, durch den der Wirkungsgrad der Kraftwerksanlage verbessert wird, die Verwendung des Wasserdampfes zur Kühlung verschiedener Komponenten auf, bevor der Dampf in die Brennkammer eingeleitet wird.

Nach EP1659277 wird Wasser oder Wasserdampf vor dem Eintritt in die Brennkammer in den Strom der von dem Kompressor komprimierten Verbrennungsluft eingespritzt, um die NOx Emissionen zu reduzieren.

Die DE19900026 beschreibt einen Weg, indem Wasser oder Wasserdampf vorteilhaft bereits in den Verdichter eingespritzt wird und somit die Kompressionsarbeit und die Verdichterendtemperatur reduziert wird.

Die EP1065347 beschreibt eine Methode für die Sättigung von Brenngas mit Wasser und Überhitzung des resultierenden Brenngasdampfgemisches, bevor dies in die Brennkammer eines Gasturbinenkraftwerkes eingeleitet wird.

Aus der US6148602 ist ein Gasturbinenprozess bekannt, in dem ein wasserstoffreiches Brenngas gefiltert und in komprimierten reinen Sauerstoff eingespritzt wird. Vor der Filtrierung wird Wasser zur Verdunstungskühlung in das Brenngas eingeleitet.

Die WO02/18759A1 offenbart ein Verfahren zur Kühlung der Verbrennung in dem Vorbrenner einer katalytischen Brennkammer durch eine Einspritzung von Wassernebel in einen gasförmigen Brennstoff. Der gasförmige Brennstoff ist dabei Erdgas oder ein dem Erdgas ähnlicher Brennstoff, der hinsichtlich Flammenrückschlag eine geringere Gefährdung darstellt, als das in der vorliegenden Anmeldung vorgesehene wasserstoffreiche Brenngas.

### Darstellung der Erfindung

Der vorliegenden Erfindung ist die Aufgabe gestellt, eine sichere, NOx arme Verbrennung von wasserstoffreichen Brenngasen in Gasturbinen zu realisieren. Insbesondere die Sicherheit gegenüber Flammrückschlag bei Verbrennung von wasserstoffreichen Brenngasen in Gasturbinen ist der Gegenstand der Aufgabe.

Zur Lösung dieser Aufgabe wird erfindungsgemäss ein Verfahren zur Wassereinspritzung in das Brenngas vor den Brennern, zur Erzeugung eines Wasser-Brenngasnebels, der in die Brenner eingeleitet wird, vorgeschlagen. Als Wasser- Brenngasnebel ist ein Brenngas zu verstehen, in das Wasser zerstäubt worden ist und in dem als Folge feine Wassertröpfchen suspendiert sind. Damit können vier Effekte zur Zündverzögerung und Reduktion der Flammgeschwindigkeit von wasserstoffreichem Brenngas kombiniert werden:
- Wasserstoffreiches Brenngas wird durch H₂O verdünnt,
- durch die mit H₂O zugeführte Inertmasse ist das Gemisch thermisch träger und damit wird ein Temperaturanstieg reduziert,
- H₂O bremst die Reaktion kinetisch
- und das Brennstoffgemisch wird über Verdampfungswärme lokal stark gekühlt.

Damit diese Effekte möglichst wirksam werden, wird Wasser nicht in die Verbrennungsluft, die einen relativ hohen Volumen- und Massenanteil in der Brennkammer hat, sondern direkt in das Brenngas eingebracht. Um den oben beschriebenen Effekt der lokalen Kühlung durch Verdunstung zu erzeugen, wird das Wasser nicht als Dampf zugemischt oder im Brenngas verdampft und überhitzt, sondern in flüssiger Form so eingespritzt, so dass ein Wasser-Brennstoffnebel entsteht. Damit wird sichergestellt, dass das in Form von feinen Tropfen zugeführte Wasser den Bereich im Brenner erreicht, an der es den grössten Effekt auf eine Flamme bzw. die Flammgeschwindigkeit hat.

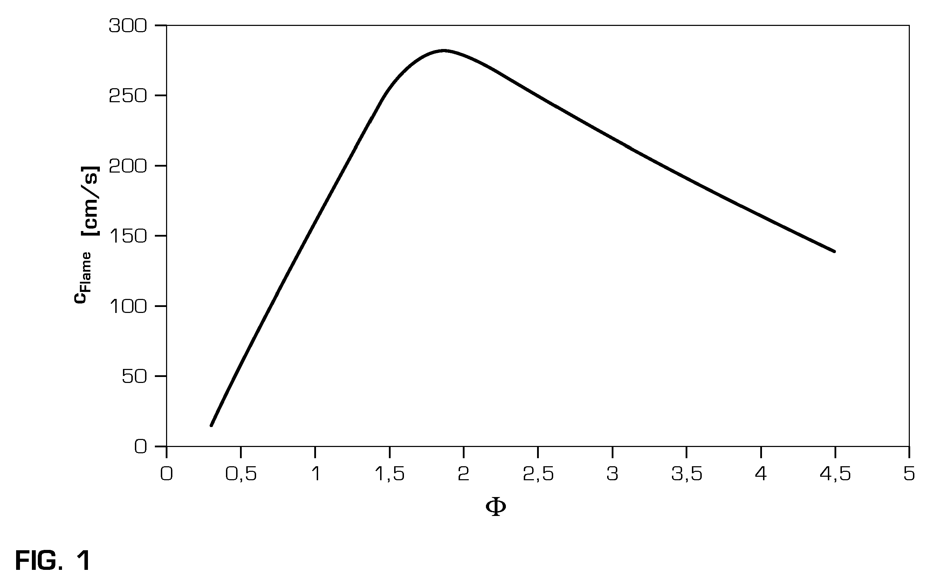

Die grundlegende Problematik der Wasserstoffverbrennung kann anhand von Figur 1, in der die Flammgeschwindigkeit von Wasserstoff in Luft unter atmosphärischen Bedingungen in Abhängigkeit des stöchiometrischen Verhältnisses Φ zeigt, erläutert werden. Im Gegensatz zu Erdgasen (beispielsweise Brenngas mit über 80% Methananteil), die ihre höchste Flammgeschwindigkeit bei praktisch stöchiometrischer Verbrennung (Φ =1, der gesamte Luftsauerstoff wird bei der Reaktion mit dem Benngases verbraucht) erreichen, und bei fettem Gemisch schnell eine deutliche Reduktion der Flammgeschwindigkeit zeigen, erreicht die Wasserstoffflamme bei fetten Gemischen mit Φ von knapp 2 ihr Maximum. Der brennbare Bereich und eine hohe Flammgeschwindigkeit erstreckt sich bis zu sehr fetten Gemischen. Diese hohe Flammgeschwindigkeit bei fettem Gemisch führt ohne geeignete Gegenmassnahmen in einer Gasturbine zu einer Entzündung und Flammrückschlag der Luft-Brennstoffgemische unmittelbar nach Einspritzung des wasserstoffreichen Brennstoffes. Die Zündung findet statt, bevor es zu einer deutlichen Reduktion des Brennstoffgehaltes durch Vermischung mit Kompressorendluft kommen kann. Die Flamme schlägt dabei unkontrolliert in die Brenner zurück und es kommt durch die lokal hohen Brennstoffkonzentrationen zu sehr gossen Temperaturspitzen mit entsprechend großer NOx Emission. In Folge des Flammrückschlages kann ausserdem die Brennerhardware innerhalb kurzer Zeit beschädigt werden.

Durch die oben erläuterten Effekte eines Wasser- Brenngasnebels wird die Reaktionsgeschwindigkeit des wasserstoffreichen Brenngases soweit reduziert, dass eine weitgehende Vermischung des Brenngases mit der Verbrennungsluft realisiert werden kann, bevor es zur eigentlichen Verbrennung kommt.

Ein wichtiger Effekt zur Verzögerung der Flamme wird erreicht, wenn die Wassertröpfchen im Brenngas bis in die Brennkammer erhalten bleiben. Dort wird durch die Verdunstungswärme des mitgeführten Wassernebels ein schneller Temperaturanstieg des Brenngases verhindert und somit die Entzündung vor der gewünschten Vermischung mit Verbrennungsluft unterdrückt.

Ein weiterer Vorteil eines Wasser- Brenngasnebels ist die mit steigendem Wasseranteil steigende Dichte des Nebels. Die Eindringtiefe des Wasser-Brenngasnebels in die Verbrennungsluft ist proportional zur Dichte des Nebels. Durch die erhöhte Eindringtiefe des Wasser- Brenngasnebels kann das Brenngas von den Randzonen und Grenzschichten des Brenners, in denen tiefe Strömungsgeschwindigkeiten herrschen, ferngehalten werden. Damit kann die Flammrückschlaggefahr weiter reduziert und Brennersicherheit entsprechend weiter erhöht werden.

Alternativ kann bei gleicher Eindringtiefe die Einspritzgeschwindigkeit mit wachsender Dichte des Wasser- Brenngasnebels reduziert werden. Geringere Einspritzgeschwindigkeit bedeutet kleinere Druckverluste und damit tiefere Anforderungen an den Zuströmdruck des Brenngases und der Wassereinspritzung. Neben tieferen Systemkosten hat dies in den Fällen, in denen das Brenngas zur Einleitung in die Gasturbinenanlage komprimiert werden muss, eine Reduktion der Kompressionsleistung zur Folge. Diese Einsparung kann insbesondere bei wasserstoffreichen Brenngasen, die hohe Volumenströme erfordern, erheblich sein.

Im Vergleich zur Dampfeinspritzung hat eine Wassereinspritzung systeminhärent den Vorteil deutlich kleinerer Baugrösse. Insbesondere fallen auch Wärmeisolierungen auf den Zuleitungen und lange Verbindungsleitungen von dem Dampfteil des Kraftwerkes zum Gasturbinenteil weg. Damit sind die Kosten des Brenngasverteilungssystems und der Zuleitungen deutlich reduziert.

Die Anordnung um die räumlich eng begrenzte Brennkammer einer Gasturbine wird einfacher und die Zugänglichkeit für Wartungszwecke der Gasturbine wird nicht so stark beeinträchtigt, wie bei einer Dampfeinspritzung.

Durch die Kombination der Eingangs erläuterten Effekte, inklusive Ausnutzung der Verdunstungswärme um die Flammgeschwindigkeit zu reduzieren und der für diese Methode aufgezeigten lokalen Wirksamkeit, wird im Vergleich zu herkömmlichen Methoden der Wasserbedarf reduziert. Neben der besseren Umweltverträglichkeit bedeutet dies eine kleinere Wasseraufbereitungsanlage und kleinere Pumpen zur Wassereinspritzung und damit nicht nur geringere Systemkosten, sondern auch geringe Energiekosten. Im Vergleich zu den herkömmlichen Methoden mit Dampfeinspritzung und / oder Gasverdünnung ist mit dieser optimierten Wassereinspritzung der Einfluss auf den Gasturbinenprozess ebenfalls minimiert, so dass der Aufwand für Designanpassungen oder Anpassungen an Betriebsparameter und Betriebskonzept vergleichsweise klein sind.

Der Kühleffekt, den das Brenngas durch die Wassereinspritzung vor erreichen der Brennkammer erfährt, wird gewünscht und ist von Vorteil, da mit der reduzierten Temperatur die Flammgeschwindigkeit weiter herabgesetzt wird.

Die Wassereinspritzung in das Brenngas bleibt nicht auf die reine Wassereinspritzung zur Erzeugung eines Wasser- Brenngasnebels beschränkt. Kombinationen mit den bekannten Massnahmen zur Flammrückschlagsverhütung und NOx Emissionsreduktion sind möglich und können entsprechend den spezifischen Gegebenheiten vorteilhaft sein. Dies ist zum Beispiel der Fall, wenn bei einer Syngasanlage N₂ als Abfallprodukt auf ausreichendem Druckniveau verfügbar ist und ein Teil der einzuspritzenden Wassermenge auf dem Wege der Gasverdünnung eingespart werden kann.

In einer Ausführung des Verfahrens wird zur Verhinderung von Flammrückschlägen das einzuspritzende Wasser mit flammhemmenden Stoffen dotiert.

In einer Ausführung des Verfahrens wird die Tröpfchengrösse des eingespritzten Wassers so gewählt, dass der grösste Teil des Wassers die Brennkammer noch als im Brenngas suspendierte Tröpfchen erreicht und nicht bereits im Brenngasverteilsystem verdampft. Unter der Randbedingung, dass der grösste Teil des Wassers die Brennkammer erreicht, ist die Tröpfchengrösse aber so klein wie möglich zu halten, um in der Brennkammer eine schnelle Verdunstung und damit die gewünschte, starke lokale Kühlung sicher zu stellen.

Die optimale Wassertröpfchengrösse ist von den für die Verdunstung der Wassertröpfchen und für den Transport des Wasser- Brenngasnebels im Brenngasverteilsystem relevanten Parametern und von den für die Verbrennung relevanten Parametern abhängig. In Bezug auf den Transport und Verdunstung ist die optimale Tröpfchengrösse proportional zu Temperatur und Druck des Brenngases sowie der Verweilzeit zwischen Einspritzung in das Brenngas und Erreichen der Brenner. Weiter ist der Wasseranteil zu berücksichtigen. Dabei ist die Verweilzeit abhängig von der Anordnung der Einspritzung und der Strömungsgeschwindigkeit in den Brenngasversorgungsleitungen. In Bezug auf die Verbrennung ist die Tröpfchengrösse abhängig von der Kompressoraustrittstemperatur, dem Brennkammerdruck, der Heissgastemperatur und anderen für die Verbrennung massgebenden Parametern.

Neben dem Verfahren, ist eine Gasturbinenanlage vorgeschlagen, gekennzeichnet durch wenigstens eine Vorrichtung zur Einspritzung von Wasser in das Brenngas vor den Brenner.

Eine Ausführung ist eine Gasturbinenanlage mit Vorrichtungen zur Einspritzung von Wasser in das Brenngas, in lokal, den einzelnen Brennern vorgeschaltete Einzel- Plena, welche beispielsweise ringförmig um eine Ringbrennkammer angeordnet sind. Damit wird die Leitungslänge zwischen den Einzel- Plena und den Brennern minimiert und eine möglichst gerade Leitungsführung unter Vermeidung von Umlenkungen oder Bögen, an denen sich Tropfen abscheiden können, realisierbar. Dies erlaubt die Wahl relativ kleiner Tröpfchen und verringert die Gefahr des Tropfenniederschlages und der Tropfenakkumulierung im Brenngasverteilsystem und damit der Bildung von grossen Sekundärtropfen. Grosse Sekundärtropfen führen nur noch bedingt zu der gewünschten lokalen Kühlung im Brennstoff-Luft Gemisch und bürgen die Gefahr von thermischen Schocks, falls sie Heissteile erreichen.

Eine weitere Ausführung ist eine Gasturbinenanlage mit Vorrichtungen zur Einspritzung von Wasser in ein einziges Plenum zur Erzeugung eines Wasser-Brenngasnebels vor dem, beispielsweise ringförmig um die Brennkammer angeordneten Brenngasverteilsystem, das die Einzelbrenner mit Wasser-Brenngasnebel versorgt. Der Vorteil dieser Anordnung ist die Einspritzung an nur einer Stelle und der Einsparung aufwendiger Zuleitungen zu den Einzel- Plena. Die Komplexität und Kosten des Systems können damit deutlich reduziert werden. Der Möglichkeit von Sekundärtropfenbildung oder völligen Verdampfung des Wassers während der relativ langen Verweilzeit im Brenngasverteilsystem ist bei dieser Ausführung Rechnung zu tragen. Zur Vermeidung von Sekundärtropfen muss die Tropfengrösse klein genug gewählt werden. Dies beschleunigt wiederum die Verdampfung so, dass der Wassergehalt erhöht werden muss und in der Regel das Brenngas übersättigt wird, um eine gleichmässige Eindüsung von Wasser- Brenngasnebel in alle Brenner zu gewährleisten.

Eine Ausführung ist eine Gasturbinenanlage mit Vorrichtungen zur Einspritzung von Wasser in das Brenngas, in lokale Plena, welche beispielsweise ringförmig um eine Ringbrennkammer angeordnet sind, von denen je zwei oder mehr Brenner mit einem Wasser- Brenngasnebel versorgt werden. Damit wird gegenüber einer Anordnung mit einem Einzel- Plenum pro Brenner der Aufwand für Zuleitungen, Wassereinspritzung usw. reduziert und die Leitungslängen zwischen den Plena und den Brennern wird klein gehalten und eine gerade Leitungsführung unter Vermeidung von Umlenkungen oder Bögen, an denen sich Tropfen abscheiden können, bleibt realisierbar. Dies erlaubt die Wahl relativ kleiner Tröpfchen und verringert die Gefahr des Tropfenniederschlages und der Tropfenakkumulierung im Brenngasverteilsystem und damit der Bildung von grossen Sekundärtropfen.

Für die Zerstäubung von Wasser sind verschiedene Methoden bekannt, die auch für die Zerstäubung in Brenngas anwendbar sind. Herkömmliche Druckzerstäubung, ebenso wie die aus WO 9967519 bekannt gewordene Flash-Zerstäubung, bei der überhitzte, unter Druck stehende Flüssigkeit durch spontanes Sieden beim Düsenaustritt eine Zerstäubung bewirkt, oder die Druck-Drall-Zerstäubung, bei der Flüssigkeit weiterhin am Austritt aus einer Zerstäuberdüse ein Drall aufgeprägt wird, sind zweckmässige Einspritzarten. Bekannt und anwendbar ist auch die Kombination von Flash-Zerstäubung und Druck-Drall-Zerstäubung, welche in WO 9967519 unter dem Namen Swirl-Flash-Zerstäubung bekannt geworden ist.

Weiter sind hilfsmedienunterstützte Zerstäuberdüsen vorteilhaft einsetzbar, da sie einen weiten Regelbereich des Massenstromes und der Tropfengrösse erlauben. Wenn das Brenngas mit ausreichendem Druckniveau verfügbar ist, kann die Nutzung eines Teilbrennstoffstromes als Medium für hilfsmedienunterstützte Zerstäuberdüsen vorgesehen werden. Andernfalls ist ein Gas wie N2 oder Dampf, das die oben erwähnten Verdünnungseigenschaften für Wasserstoff besitzt, als Hilfsmedium vorteilhaft.

Für die Regelung der einzuspritzenden Wassermenge sind verschiedene Parameter zu berücksichtigen.

In einer Ausführung des Verfahrens wird die Wassermenge proportional zur Brennereintrittstemperatur der Verbrennungsluft gewählt. Dies kann die Verdichterendtemperatur oder, im Fall einer sequentiellen Verbrennung, die Austrittstemperatur aus einer vorgeschalteten Hochdruckturbine sein. Die erforderliche Wassermenge wird weiter proportional zum Brennkammerdruck und zur Temperatur des Brenngases bestimmt.

Weiterhin wird in einer Ausführung die Wassermenge abhängig von der Brenngaszusammensetzung, wobei sie im wesentlichen proportional zum H2 Gehalt ist, geregelt. Bei sich ändernden Brenngaszusammensetzungen kann eine genügend schnelle Online Analyse des Brenngases, die Änderungen der Zusammensetzung erkennt, bevor das Gas die Brennkammer erreicht, vorgesehen werden. Abhängig von der Brenngaszusammensetzung wird die Wassermenge entsprechend regelt.

Die Wassermenge wird in einer Ausführung abhängig von der Temperatur kritischer, Flammrückschlag gefährdeter Bauteile, wie Brennerschalen oder Brenngaslanzen geregelt, wobei die eingespritzte Wassermenge proportional zur Temperatur erhöht bzw. reduziert wird, um eine Zieltemperatur zu erreichen.

In einer Ausführung wird die eingespritzte Wassermenge abhängig, aber umgekehrt proportional, von dem Wassergehalt der Brennkammereintrittluft geregelt. Dieser ist eine Funktion der ambienten Luft sowie der auf dem Weg in die Brennkammer, zum Beispiel über Fogging für Kühlung der Ansaugluft oder Wet Compression (auch als High Fogging bekannt) zugeführten Wasseranteils. Für den Fall der sequentiellen Verbrennung, wie sie beispielsweise aus der EP0620362 hervorgeht, ist bei der Eintrittsluft der zweiten Brennkammer der in der ersten Brennkammer direkt zugeführte und über chemische Reaktion zugeführte Wasseranteil zu berücksichtigen. Der Wasseranteil lässt sich auch über Messung des Wasseranteils der Abgase und unter Berücksichtigung des über chemische Reaktion zugeführten Wasseranteils ermitteln.

Die Regelung der Wassermenge und Tropfengösse ist in verschiedenen Kombination der oben angegebenen Abhängigkeiten, in Kombination mit anderen, hier nicht genanten Betriebsparametern des Kraftwerkes, sowie vereinfachend in Alleinstellung in Abhängigkeit von nur einem Parameter, realisierbar.

Für den Betrieb der Kraftwerksanlage hat das aufgezeigte Verfahren ausserdem deutliche Vorteile. Laständerungen der Gasturbinenanlage können ohne Einfluss auf den Dampfteil des Kraftwerkes schnell und unabhängig abgefahren werden. Bei tiefer Teillast sind keine Mindestmengen, wie herkömmlich zum Warmhalten der Dampfleitungen benötig, abzunehmen. Insbesondere der Start-up wird wesentlich vereinfacht, da keine Vorwärmung des Dampfsystems benötigt wird. Separat gefeuerte Zusatzkessel für die Bereitstellung des Dampfes beim Anfahren entfallen.

### Kurze Beschreibung der Zeichnungen

Es zeigen:
Fig. 1 die Abhängigkeit der Flammgeschwindigkeit einer Wasserstoffflamme in Luft unter atmosphärischen Bedingungen vom stöchiometrischen Verhältnis Φ,
Fig. 2 eine Vorrichtung zur Durchführung des Verfahrens an dem Beispiel einer Gasturbinenanlage mit sequentieller Verbrennung,
Fig. 3 Details zu einer Vorrichtung zur Durchführung des Verfahrens zur Wassereinspritzung mit Einzel- Plena zur Einspritzung von Wasser in das Brenngas am Beispiel einer ersten Brennkammer,
Fig. 4 Details zu einer Vorrichtung zur Durchführung des Verfahrens zur Wassereinspritzung mit einem Plenum zur Einspritzung von Wasser in Brenngas und Verteilung des Wasser- Brenngasnebels am Beispiel einer ersten Brennkammer.

### Ausführung der Erfindung

Eine Gasturbine mit einer Vorrichtung zur Durchführung des erfindungsgemässen Verfahrens weisst im wesentlichen mindestens einen Verdichter, mindestens eine Brennkammer und mindestens eine Turbine auf, die über mindestens eine Welle den Verdichter und einen Generator antreibt.

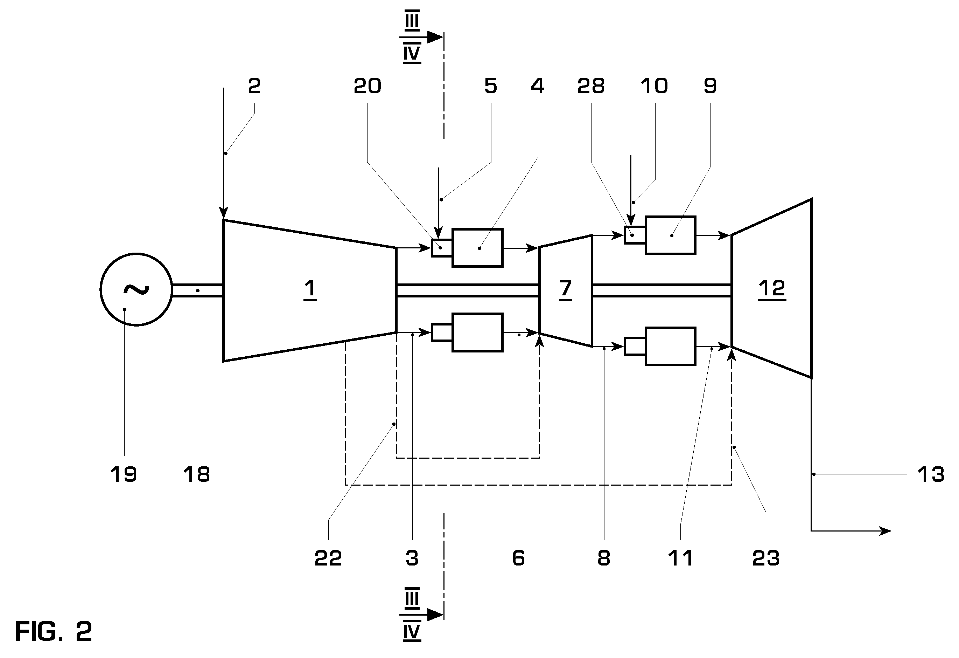

Fig. 2 zeigt beispielsweise eine Gasturbinenanlage mit sequentieller Verbrennung, die auf ebenfalls an sich bekannter Weise einen Verdichter 1, eine erste Brennkammer 4, eine erste Turbine 7, eine zweite Brennkammer 9, eine zweite Turbine 12, sowie einen Generator umfasst. Die Turbinen 7 und 12 treiben über eine Welle 18 den Verdichter 1 und den Generator 19 an.

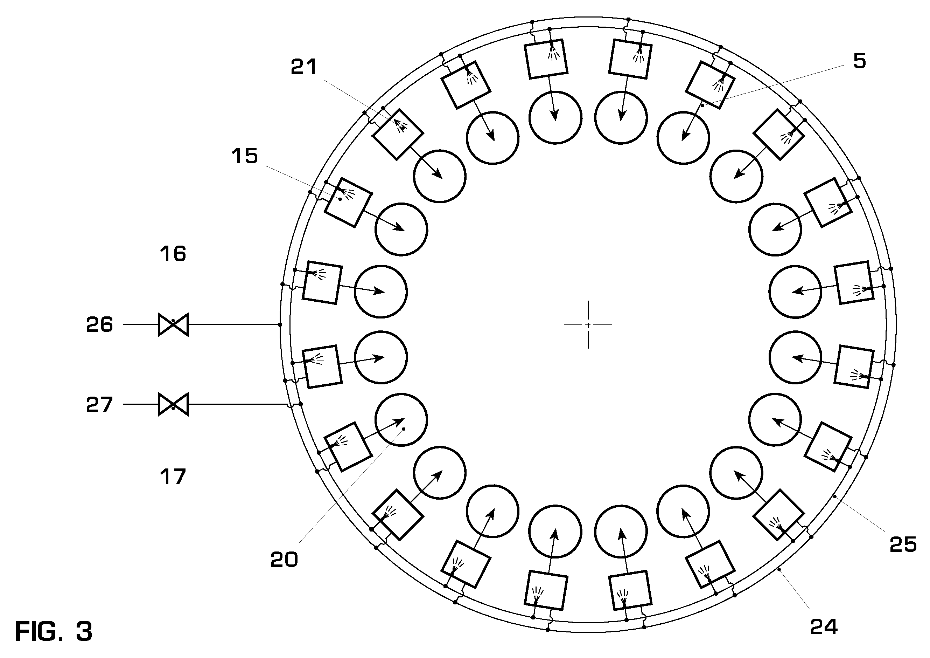

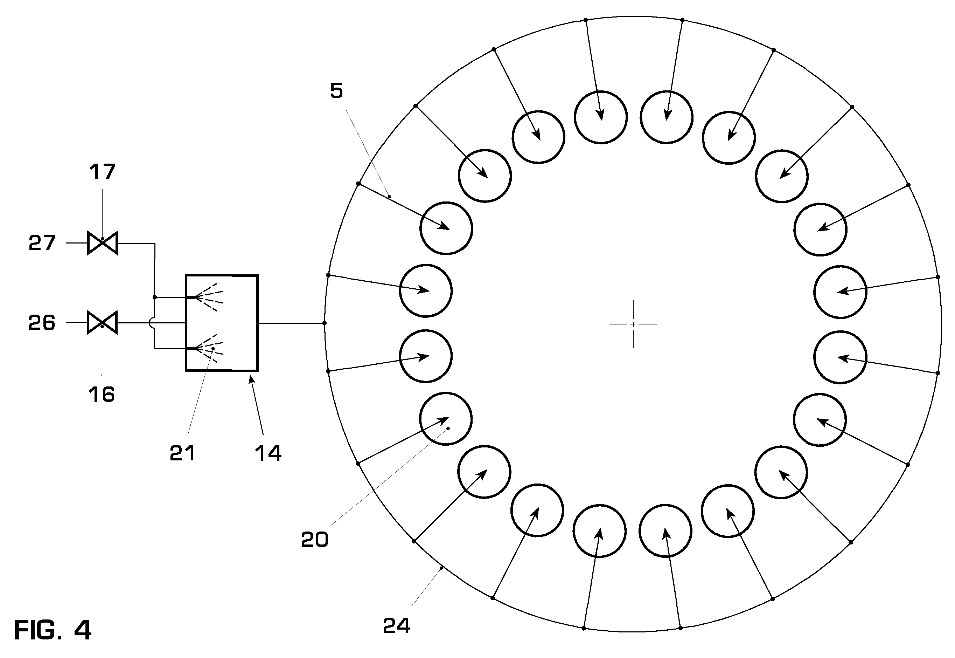

Die Brennkammern sind beispielsweise als Ringbrennkammern mit einer Vielzahl von Einzelbrennern 20 ausgeführt, wie es in Fig. 3 und 4 am Beispiel der ersten Brennkammer gezeigt ist. Jeder dieser Brenner wird über ein Brenngasverteilsystem 24 mit Brenngas versorgt.

Erfindungsgemäss wird in das Brenngas vor Einleitung in die Brenner 20 Wasser eingespritzt, um einen Wasser- Brenngasnebel zu erzeugen, der den Flammrückschlag verhindert und die NOx Emissionen reduziert. Ausführungsbeispiele von Vorrichtungen zur Wassereinspritzung in das Brenngas und Erzeugung des Wasser-Brenngasnebels werden anhand von Fig. 3 und Fig. 4 erläutert.

Fig. 3 zeigt ein Ausführungsbeispiel, in dem jedem einzelnen Brenner 20 der ersten Brennkammer ein Einzel-Plenum 15 zugeordnet ist. Die Einzel- Plena 15 sind unmittelbar vor den Brennern angeordnet. Damit wird die Leitungslänge zwischen den Einzel- Plena 15 und den Brennern 20 minimiert und eine möglichst gerade Leitungsführung unter Vermeidung von Umlenkungen oder Bögen, an denen sich Tropfen abscheiden können, realisiert. Durch jedes dieser Plena 15 wird Brenngas geleitet und Wasser fein zerstäubt eingespritzt. Zur Wassereinspritzung 21 kann beispielsweise eine Dralldüse oder eine Vielzahl von Dralldüsen für Druckzerstäubung eingesetzt werden. Der Wasser- Brenngasnebel wird weiter über die Wasser-Brenngasnebelzuführung 5 in die Brenner 20 eingespritzt.

Zur Versorgung der Einzel-Plena 15 mit Brenngas 26 ist ein ringförmiges Brenngasverteilsystem 24 vorgesehen. Der Brenngasmassenstrom wird über ein Regelorgan 16 geregelt.
Weiter ist zur Versorgung der Einzel-Plena 15 mit Wasser 27 ein ringförmiges Wasser- Distributionssystem 25 vorgesehen. Der Wassermassenstrom wird über ein Regelorgan 17 geregelt.

In weiteren möglichen Ausführungen sind die Einzel- Plena 15 in den Brennerkopf der Brenner 20 oder in eine Brennstofflanze, die den Brennstoff in die Brennkammer einbringt, integriert.

Fig. 4 zeigt ein Ausführungsbeispiel, in dem in einem Plenum 14, der gesamte, für eine erste Brennkammer benötigte Wasser- Brenngasnebel erzeugt wird. In dieses Plenum 14 wird das Brenngas 26 geleitet und Wasser 27 fein zerstäubt eingespritzt. Zur Wassereinspritzung 21 kann beispielsweise eine Dralldüse oder eine Vielzahl von Dralldüsen für Druckzerstäubung eingesetzt werden. Der Wasser- Brenngasnebel wird weiter über Brenngasverteilsystem verteilt und durch die Wasser-Brenngasnebelzuführung 5 in die Brenner 20 eingespritzt. Die Wassertropfengrösse ist entsprechend der relativ langen Verweilzeit der Tropfen im Brenngasverteilsystem und der bei dieser Anordnung unvermeidbaren Umlenkungen klein zu wählen und eine Übersättigung des Brenngases anzustreben. Der Brenngasmassenstrom wird über ein Regelorgan 16 geregelt. Der Wassermassenstrom wird über ein Regelorgan 17 geregelt.

Die Ausgestaltung der Erfindung ist für eine zweite Brennkammer einer Gasturbinenanlage mit sequentieller Verbrennung in analoger Weise sowohl mit Einzel- Plena oder einem Plenum durchführbar.

Der zur sicheren, NOx-emissionsarmen Verbrennung von wasserstoffreichen Brenngasen benötigte Wassermassenstrom wird abhängig von einer Reihe von Parametern, wie Brennkammerdruck, Eintrittstemperatur usw. geregelt.

In einer praktisch einfachen Ausführung wird das Verhältnis Ω von eingespritztem Wasser und Brenngas konstant gewählt. Der Wasseranteil Ω ist in diesem Fall so gross zu wählen, dass er selbst unter den ungünstigsten Betriebsbedingungen noch einen sicheren Betrieb gewährleistet. Der Brenngasmassenstrom wird dabei entsprechend dem Gasturbinenfahrkonzept und der kommandierten Leistung über das Regelorgan 16 geregelt. Für den Regler ist damit der aktuelle Brenngasmassenstrom aus der Stellung des Regelorgans oder einer entsprechenden Brenngasmessstelle bekannt. Multipliziert mit dem vorgegebenen Wasseranteil Ω ergibt sich unmittelbar der kommandierte Wassermassenstrom. Dieser wird über das Regelorgan 17 und gegebenenfalls entsprechende Wassermassenstrommessung eingestellt.

In weiter verfeinerten Ausführungen wird der Wasseranteil Ω in Abhängigkeit der relevanten Betriebsparameter variiert. Die Abhängigkeiten lassen sich durch Näherungsgleichungen für die Regelung darstellen oder können der Regelung zum Beispiel in Tabellen zur Interpolation vorgegeben werden.

In praktisch einfachen Ausführungen mit Dralldüsen für Druckzerstäubung kann mit konstanten Tropfengrössen gearbeitet werden. Die eingespritzte Wassermenge wird dann Stufenweise durch die Anzahl der zugeschalteten Einspritzdüsen variiert. Über eine Variation des Wasserdruckes kann der pro Düse eingespritzte Wassermassenstrom weiter fein eingestellt werden.

Zur Einspritzung in das Brenngas wird in der Regel hochreines, demineralisiertes Wasser, wie es auch zur NOx Reduktion bei Ölbetrieb zum Einsatz kommt, verwendet. Die hierzu vorhanden Systeme oder ähnlich aufgebaute Systeme, wie Wasseraufbereitung und Pumpen sowie Hochdruckpumpen, können auch für die Wasserversorgung und Wassereinspritzung in wasserstoffreiche Brenngase genutzt werden.

### Bezugszeichenliste

- 1: Verdichter
- 2: Angesaugte Luft
- 3: Verdichtete Luft
- 4: Erste Brennkammer
- 5: Wasser-Brenngasnebelzuführung
- 6: Heissgase
- 7: Erste Turbine
- 8: Teilentspannte Heissgase
- 9: Zweite Brennkammer
- 10: Wasser-Brenngasnebelzuführung
- 11: Heissgase
- 12: Zweite Turbine
- 13: Abgase (zum Abhitzekessel)
- 14: Plenum
- 15: Einzel- Plenum
- 16: Regelorgan für Brenngas
- 17: Regelorgan für Einspritzwasser
- 18: Welle
- 19: Generator
- 20: Brenner für die erste Brennkammer
- 21: Wassereinspritzung
- 22: Kühlluft
- 23: Kühlluft
- 24: Brenngasverteilsystem
- 25: Wasser- Distributionssystem
- 26: Brenngas
- 27: Wasser
- 28: Brenner für die zweite Brennkammer

- Ω: Wasser- Brenngas- Massenverhältnis
- Φ: stöchiometrisches Verhältnis des Brenngases

## Patentansprüche

1. Verfahren zum Betrieb einer Gasturbine mit wasserstoffreichem Brenngas, **dadurch gekennzeichnet, dass** Wasser (27) in das Brenngas (26) vor den Brennern (20) eingespritzt wird und so feine Wassertröpfchen im Brenngas suspendiert werden und ein Wasser- Brenngasnebel erzeugt wird,
**dadurch gekennzeichnet, dass** dieser Nebel in die Brenner (20) der Gasturbine eingeleitet wird.

2. Verfahren nach Anspruch 1, **dadurch gekennzeichnet, dass** die Dichte des Wasser- Brenngasnebels höher ist, als die des reinen Brenngases.

3. Verfahren nach einem der Ansprüche 1 bis 2, **dadurch gekennzeichnet, dass** die Wassereinspritzung in das Brenngas in Plena (15) unmittelbar vor den Brennern (20) erfolgt.

4. Verfahren nach einem der Ansprüche 1 bis 2, **dadurch gekennzeichnet, dass** Wassereinspritzung in ein einziges Plenum (15) erfolgt und der Wasser-Brenngasnebel durch ein Brenngasverteilsystem (24) auf die Brenner (20) verteilt wird.

5. Verfahren nach einem der Ansprüche 1 bis 4, **dadurch gekennzeichnet, dass** der Wasser- Brenngasnebel mit Dampfeinspritzung und/ oder Stickstoffeinspritzung und/ oder einer Absenkung von bezüglich Flammrückschlag kritischen Betriebsparametern kombiniert wird.

6. Verfahren nach einem der Ansprüche 1 bis 5, **dadurch gekennzeichnet, dass** die Tröpfchengröße des eingespritzten Wassers abhängig von Betriebsparametern, wie Kompressoraustrittstemperatur und/ oder Brennkammerdruck und/ oder Brenngastemperatur und/ oder Brenngasmassenstrom und/ oder anderen geeigneten, für die Verbrennung massgebenden Parametern, geregelt wird.

7. Verfahren nach einem der Ansprüche 1 bis 6, **dadurch gekennzeichnet, dass** die in das Brenngas eingespritzte Wassermenge proportional zu der Brenngasmenge ist.

8. Verfahren nach einem der Ansprüche 1 bis 6, **dadurch gekennzeichnet, dass** das Verhältnis Ω von eingespritzter Wassermenge zu Brenngasmenge konstant gehalten wird.

9. Verfahren nach einem der Ansprüche 1 bis 6, **dadurch gekennzeichnet, dass** das Verhältnis Ω von eingespritzter Wassermenge zu Brenngasmenge abhängig von Betriebsparametern, wie Kompressoraustrittstemperatur und/ oder Brennkammerdruck und/ oder Brenngastemperatur und/ oder Brenngasmassenstrom und/ oder Materialtemperaturen kritischer, rückschlaggefährdeter Bauteile, wie Brennerschalentemperaturen und/ oder Brenngaszusammensetzung und / oder H₂ Anteils des Brenngases und/ oder anderen geeigneten, für die Verbrennung massgebenden Parametern, geregelt wird.

10. Verfahren nach einem der Ansprüche 1 bis 9, **dadurch gekennzeichnet, dass** das einzuspritzende Wasser mit einem flammhemmenden Mittel vor der Einspritzung in das Brenngas dotiert wird.

11. Eine stationäre Gasturbinenanlage zur Durchführung des Verfahrens nach Anspruch 1, wobei wenigstens eine Vorrichtung zur Einspritzung (21) von Wasser in das Brenngas vor Einleitung in die Brenner (20) vorgesehen ist.

12. Eine Gasturbinenanlage nach Anspruch 11, **dadurch gekennzeichnet, dass** zur Einspritzung von Wasser in das Brenngas Plena (15) um die Brennkammer (4 und/ oder 9) angeordnet sind und in jedem Plenum wenigstens eine Vorrichtung zur Einspritzung (21) von Wasser in das Brenngas angeordnet ist.

13. Eine Gasturbinenanlage nach Anspruch 11, **dadurch gekennzeichnet, dass** zur Einspritzung von Wasser in das Brenngas ein einziges Plenum (15) vorgesehen ist, von dem der Wasser- Brenngasnebel über ein Brenngasverteilsystem (24) in die Brenner (20) eingeleitet wird.

14. Eine Gasturbinenanlage nach einem der Ansprüche 11 bis 13, **dadurch gekennzeichnet, dass** zur Einspritzung von Wasser in das Brenngas mindestens eine Dralldüse vorgesehen ist.

15. Eine Gasturbinenanlage nach einem der Ansprüche 11 bis 13, **dadurch gekennzeichnet, dass** zur Einspritzung von Wasser in das Brenngas mindestens eine Swirl-Flash Düse vorgesehen ist.

16. Eine Gasturbinenanlage nach einem der Ansprüche 11 bis 13, **dadurch gekennzeichnet, dass** zur Einspritzung von Wasser in das Brenngas mindestens eine Zweistoffdüse vorgesehen ist.

17. Eine Gasturbinenanlage nach einem der Ansprüche 11 bis 16, **dadurch gekennzeichnet, dass** vor der Einspritzung von Wasser in das Brenngas eine Dotiervorrichtung für flammhemmende Mittel vorgesehen ist.

## Claims

1. Method for operating a gas turbine with hydrogen-rich fuel gas, **characterised in that** water (27) is injected into the combustion gas (26) upstream of the burners (20) such that fine water droplets are suspended in the combustion gas to produce a water-combustion gas mist, **characterised in that** this mist is introduced into the burners (20) of the gas turbine.

2. Method according to claim 1, **characterised in that** the density of the water-combustion gas mist is higher than that of the pure combustion gas.

3. Method according to one of claims 1 to 2, **characterised in that** the water is injected into the combustion gas in plenum chambers (15) immediately upstream of the burners (20).

4. Method according to one of claims 1 to 2, **characterised in that** the water is injected into a single plenum chamber (15) and the water-combustion gas mist is distributed to the burners (20) by a combustion gas distribution system (24).

5. Method according to any of claims 1 to 4, **characterised in that** the water-combustion gas mist is combined with vapour injection and/or nitrogen injection and/or a reduction in operating parameters critical for flame blowback.

6. Method according to any of claims 1 to 5, **characterised in that** the droplet size of the injected water is regulated depending on operating parameters such as compressor outlet temperature and/or combustion chamber pressure and/or combustion gas temperature and/or combustion gas mass flow and/or other suitable parameters decisive for combustion.

7. Method according to any of claims 1 to 6, **characterised in that** the water quantity injected into the combustion gas is proportional to the quantity of combustion gas.

8. Method according to any of claims 1 to 6, **characterised in that** the ratio Q of injected water quantity to combustion gas quantity is held constant.

9. Method according to any of claims 1 to 6, **characterised in that** the ratio Ω of injected water quantity to combustion gas quantity is regulated depending on operating parameters such as compressor outlet temperature and/or combustion chamber pressure and/or combustion gas temperature and/or combustion gas mass flow and/or material temperatures of critical components at risk of blowback such as burner shell temperatures, and/or combustion gas composition and/or the H2 proportion of the combustion gas and/or other suitable parameters decisive for combustion.

10. Method according to any of claims 1 to 9, **characterised in that** a flame-inhibiting agent is mixed into the water to be injected before injection into the combustion gas.

11. Stationary gas turbine installation for performance of the method according to claim 1, wherein at least one device is provided for injection (21) of water into the combustion gas before its introduction into the burners (20).

12. Gas turbine installation according to claim 11, **characterised in that** for the injection of water into the combustion gas, plenum chambers (15) are arranged around the combustion chamber (4 and/or 9) and at least one device for injection (21) of water into the combustion gas is arranged in each plenum chamber.

13. Gas turbine installation according to claim 11, **characterised in that** for injection of water into the combustion gas, a single plenum chamber (15) is provided from which the water-combustion gas mist is introduced into the burners (20) via a combustion gas distribution system (24).

14. Gas turbine installation according to any of claims 11 to 13, **characterised in that** at least one swirl nozzle is provided for injection of water into the combustion gas.

15. Gas turbine installation according to any of claims 11 to 13, **characterised in that** at least one swirl-flash nozzle is provided for injection of water into the combustion gas.

16. Gas turbine installation according to any of claims 11 to 13, **characterised in that** at least one two-substance nozzle is provided for injection of water into the combustion gas.

17. Gas turbine installation according to any of claims 11 to 16, **characterised in that** a mixing device for the flame-inhibiting agent is provided before the injection of water into the combustion gas.

## Revendications

1. Procédé pour l'exploitation d'une turbine à gaz avec un gaz combustible riche en hydrogène, **caractérisé en ce que** l'eau (27) est injectée dans le gaz combustible (26) avant les brûleurs (20) et des gouttelettes d'eau sont ainsi suspendues dans le gaz combustible et un brouillard d'eau et de gaz combustible est produit, **caractérisé en ce que** ce brouillard est guidé vers les brûleurs (20) de la turbine à gaz.

2. Procédé selon la revendication 1, **caractérisé en ce que** la densité du brouillard eau-gaz combustible est supérieure à celle du gaz combustible pur.

3. Procédé selon l'une des revendications 1 à 2, **caractérisé en ce que** l'injection d'eau dans le gaz combustible a lieu dans des collecteurs (15) immédiatement avant les brûleurs (20).

4. Procédé selon l'une des revendications 1 à 2, **caractérisé en ce que** l'injection d'eau a lieu dans un seul collecteur (15) et le brouillard eau-gaz combustible est réparti par un système de répartition de gaz combustible (24) sur les brûleurs (20).

5. Procédé selon l'une des revendications 1 à 4, **caractérisé en ce que** le brouillard eau-gaz combustible est combinée avec une injection de vapeur et/ou une injection d'azote et/ou une diminution de paramètres d'exploitation critiques en ce qui concerne un retour de flamme.

6. Procédé selon l'une des revendications 1 à 5, **caractérisé en ce que** la taille des gouttelettes de l'eau injectée est régulée en fonction des paramètres d'exploitation, comme la température de sortie du compresseur et/ou la pression de la chambre de combustion et/ou la température du gaz combustible et/ou le débit massique du gaz combustible et/ou d'autres paramètres pertinents pour la combustion.

7. Procédé selon l'une des revendications 1 à 6, **caractérisé en ce que** la quantité d'eau injectée dans le gaz combustible est proportionnelle à la quantité de gaz combustible.

8. Procédé selon l'une des revendications 1 à 6, **caractérisé en ce que** le rapport Ω entre la quantité d'eau injectée et la quantité de gaz combustible est maintenu constant.

9. Procédé selon l'une des revendications 1 à 6, **caractérisé en ce que** le rapport Ω entre la quantité d'eau injectée et la quantité de gaz combustible est régulé en fonction des paramètres d'exploitation comme la température de sortie du compresseur et/ou la pression de la chambre de combustion et/ou des températures de matériaux de composants critiques risquant d'être détériorés par un retour de flamme, comme les températures des coques des brûleurs et/ou la composition du gaz combustible et/ou la teneur du gaz combustible en H₂ et/ou d'autres paramètres adaptés, pertinents pour la combustion.

10. Procédé selon l'une des revendications 1 à 9, **caractérisé en ce que** l'eau à injecter est dotée d'une substance ignifuge avant l'injection dans le gaz combustible.

11. Installation à turbine à gaz stationnaire pour la réalisation du procédé selon la revendication 1, au moins un dispositif d'injection (21) d'eau dans le gaz combustible avant l'introduction dans les brûleurs (20).

12. Installation à turbine à gaz selon la revendication 11, **caractérisée en ce que**, pour l'injection d'eau dans le gaz combustible, des collecteurs (15) sont disposés autour de la chambre de combustion (4 et/ou 9) et, dans chaque collecteur, se trouve au moins un dispositif pour l'injection (21) d'eau dans le gaz combustible.

13. Installation à turbine à gaz selon la revendication 11, **caractérisée en ce que**, pour l'injection d'eau dans le gaz combustible, un seul collecteur (15) est prévu, à partir duquel le brouillard eau-gaz combustible est introduit dans les brûleurs (20) par l'intermédiaire d'un système de répartition de gaz combustible (24).

14. Installation à turbine à gaz selon l'une des revendications 11 à 13, **caractérisée en ce que**, pour l'injection d'eau dans le gaz combustible, au moins une buse à turbulences est prévue.

15. Installation à turbine à gaz selon l'une des revendications 11 à 13, **caractérisée en ce que**, pour l'injection d'eau dans le gaz combustible, au moins une buse « swirl-flash » est prévue.

16. Installation à turbine à gaz selon l'une des revendications 11 à 13, **caractérisée en ce que**, pour l'injection d'eau dans le gaz combustible, au moins une buse à double injection est prévue.

17. Installation à turbine à gaz selon l'une des revendications 11 à 16, **caractérisée en ce que**, avant l'injection d'eau dans le gaz combustible, un dispositif d'introduction de substance ignifuge est prévu.
